(19) Europäisches Patentamt
European Patent Office
Office européen des brevets

(11) EP 4 005 084 B1

(12) FASCICULE DE BREVET EUROPEEN

(45) Date de publication et mention
de la délivrance du brevet:
**27.12.2023 Bulletin 2023/52**

(21) Numéro de dépôt: **20734994.5**

(22) Date de dépôt: **03.07.2020**

(51) Classification Internationale des Brevets (IPC):
**H02P 21/20** (2016.01)

(52) Classification Coopérative des Brevets (CPC):
**H02P 21/20**

(86) Numéro de dépôt international:
**PCT/EP2020/068779**

(87) Numéro de publication internationale:
**WO 2021/013501 (28.01.2021 Gazette 2021/04)**

(54) **PROCÉDÉ ET DISPOSITIF D'ESTIMATION DU COUPLE D'UNE MACHINE ÉLECTRIQUE SYNCHRONE À ROTOR BOBINÉ**

VERFAHREN UND VORRICHTUNG ZUR SCHÄTZUNG DES DREHMOMENTS EINER ELEKTRISCHEN SYNCHRONMASCHINE MIT GEWICKELTEM ROTOR

METHOD AND DEVICE FOR ESTIMATING THE TORQUE OF A SYNCHRONOUS WOUND-ROTOR ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2019 FR 1908322**

(43) Date de publication de la demande:
**01.06.2022 Bulletin 2022/22**

(73) Titulaire: **Renault s.a.s**
**92100 Boulogne Billancourt (FR)**

(72) Inventeur: **JANIAUD, Noelle**
**78114 Magny-les-Hameaux (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**WO-A1-2016/142599      FR-A1- 2 884 609**
**FR-A1- 3 054 391**

**Description**

La présente invention concerne le domaine des véhicules automobiles à propulsion électrique ou hybride. Plus précisément, l'invention concerne, selon un de ses aspects, un procédé d'estimation du couple d'une machine électrique à rotor bobiné d'un véhicule automobile à propulsion électrique ou hybride.

Dans un véhicule automobile à propulsion électrique ou hybride, la commande de la machine électrique utilisée pour la propulsion du véhicule utilise classiquement une boucle de régulation, permettant de réguler le couple qui va être délivré par la machine en fonction d'un couple de consigne. Afin de réguler le couple délivré, il est nécessaire de disposer d'un moyen d'estimation ou de mesure du couplé délivré pour corriger l'erreur entre le couple réalisé par la machine électrique et le couple de consigne. De plus la connaissance du couple réalisé est également nécessaire pour surveiller le bon fonctionnement de la machine électrique. Cela a pour but de vérifier qu'à tout moment le couple demandé est effectivement réalisé, notamment pour pallier des situations qui risquent d'engendrer des accélérations ou des décélérations intempestives du véhicule. Dans le cas où le couple réalisé par la machine électrique est estimé, une telle estimation est généralement déterminée à partir des mesures des courants d'alimentation de la machine électrique, ainsi que des valeurs représentatives du flux magnétique généré par les bobinages de la machine électrique.

Or, le flux magnétique généré par les bobinages de la machine électrique, qui peut être déduit des mesures des courants d'alimentation de la machine, ne varie linéairement avec ceux-ci que pour de faibles valeurs d'intensité d'alimentation. Il est donc difficile d'estimer avec précision le flux magnétique généré par une machine électrique, d'autant plus lorsque le couplage magnétique de la machine électrique est fort, comme par exemple sur une machine synchrone à rotor bobiné.

On connaît du document de brevet français EP3269035A1, un procédé d'estimation du couple d'une machine électrique utilisant deux réseaux de neurones, permettant de calculer une estimation du couple délivré par la machine en fonction d'un vecteur d'intensité comprenant comme coordonnées les intensités d'alimentation des phases du stator de la machine électrique exprimées dans un repère biphasé, par exemple le repère de Park, et l'intensité d'alimentation du rotor de la machine. Les deux réseaux de neurones reçoivent ce vecteur d'intensité en entrée et fournissent en sortie respectivement les composantes quadratique et directe du flux magnétique induit par la machine électrique dans le repère de Park. L'estimation du couple de la machine électrique est ensuite calculée à partir de ces composantes du flux magnétique et des intensités d'alimentation des phases du stator exprimées dans le repère de Park.

Pour réaliser l'apprentissage des deux réseaux de neurones, il faut connaître les entrées et les sorties de ces réseaux de neurones. Si l'on dispose des mesures des intensités d'alimentation de la machine, il est impossible de mesurer les valeurs des composantes dans le repère biphasé du flux magnétique induit par la machine. Aussi, l'apprentissage des deux réseaux de neurones doit être effectué à partir d'un modèle théorique de machine, de type quasi statistique non linéaire réalisé à partir de calculs d'éléments finis. Les valeurs des composantes dans le repère biphasé du flux magnétique sont alors accessibles à partir de ce modèle et permettent de calculer les paramètres des deux réseaux de neurones. Cependant, la mise au point de la structure à deux réseaux de neurones à partir d'un modèle de machine est complexe. En outre, le modèle de machine est imparfait et il s'avère que le couple réellement mesuré pour la machine sur un banc de mesure est différent du couple en sortie du modèle. La mise en oeuvre du procédé selon le document précité introduit donc une erreur d'estimation du couple.

Le document de brevet FR3054391 fait connaître un procédé d'estimation du couple d'une machine électrique à rotor bobiné utilisant une structure à un réseau de neurones, en entrée duquel on applique un vecteur d'intensité, comme dans le document précédent, à savoir un vecteur qui comporte les valeurs des courants des phases du stator de la machine électrique transformées dans un repère biphasé, ainsi que la valeur du courant circulant dans le rotor de la machine. Selon ce document, le réseau de neurones produit en sortie directement l'estimation du couple, et non le flux. Cependant, en raison de la relation non linéaire existant entre le couple délivré par la machine, d'une part et les courants et flux magnétiques induits par la machine d'autre part, l'apprentissage des paramètres du réseau de neurones ne fournit pas de bons résultats et l'erreur d'estimation sur le couple reste non négligeable.

Aussi, un but de l'invention est de proposer un procédé d'estimation du couple d'une machine électrique qui soit exempt des limitations précédemment évoquées et, en particulier, qui permette de réduire l'erreur d'estimation du couple tout en nécessitant d'embarquer peu de ressources de calcul et de mémoire.

A cet effet, l'invention concerne un procédé d'estimation du couple d'une machine électrique à rotor bobiné, comprenant les étapes de :

recevoir des valeurs des courants des phases du stator de ladite machine électrique et du courant rotorique de ladite machine électrique,

transformer lesdites valeurs des courants des phases (Ia, Ib, Ic) du stator dans un repère biphasé,

déterminer un vecteur d'intensité comportant lesdites valeurs de courants transformées, ainsi que ladite valeur de courant rotorique,

fournir ledit vecteur d'intensité en entrée d'au moins un réseau de neurones appliquant une fonction sigmoïde,

calculer une estimation du couple délivré par la machine à partir d'une grandeur obtenue en sortie dudit au moins un réseau de neurones,

ledit procédé étant caractérisé en ce que ledit vecteur d'intensité est fourni en entrée d'un unique réseau de neurones, en sortie duquel ladite grandeur obtenue correspond à un flux global dérivé des deux composantes dans le repère biphasé du flux magnétique induit par la machine électrique et dont la valeur est déterminable, pour un vecteur d'intensité donné, à partir d'une mesure de couple effectuée sur un banc d'essais de ladite machine pour ledit vecteur d'intensité donné.

Ainsi, grâce à ce procédé, la grandeur fournie en sortie du réseau de neurones unique utilisé étant directement déterminable à partir de mesures de couple effectuées sur un banc d'essai de la machine électrique, il est possible d'utiliser directement les mesures effectuées sur le banc pour déterminer les paramètres du réseau de neurones unique, ce qui permet une réduction significative de l'erreur d'estimation du couple, comparativement à l'utilisation d'un modèle de machine électrique. En outre, l'utilisation d'un seul réseau de neurones, qui fournit en sortie une grandeur représentative d'un flux global intégrant les deux composantes dans le repère biphasé du flux magnétique induit par la machine électrique, permet de réduire au final la charge de calcul nécessaire pour l'estimation du couple. En effet, comparativement à la structure connue de l'état de la technique à deux réseaux de neurones, où l'estimation du couple est calculée à partir des deux composantes du flux dans le repère biphasé, obtenues respectivement en sortie des deux réseaux de neurones, la moitié des paramètres peut être supprimé, l'invention prévoyant la mise en oeuvre d'un seul réseau de neurones au lieu de deux.

Avantageusement, le procédé comprend les étapes de construire une base de données d'apprentissage dudit réseau de neurones à partir d'un ensemble de mesures de couple effectuées sur le banc pour différents vecteurs d'intensité et de réaliser l'apprentissage dudit réseau de neurones unique en fonction de ladite base de données d'apprentissage.

Avantageusement, l'estimation du couple délivré par la machine électrique est calculée en appliquant la relation :

$$Ce = 3p/2*phiRDN.Iq$$

où p représente le nombre de paires de pôles de la machine électrique

phiRDN est ladite grandeur obtenue en sortie dudit réseau de neurones unique, et

Iq est la valeur de courant quadratique issue de la transformation des valeurs des courants des phases (Ia, Ib, Ic) du stator dans le repère biphasé.

$$X \rightarrow \frac{1}{1+e^{-x}}$$

De préférence, ladite fonction sigmoïde est une fonction logsig :

L'invention concerne également un dispositif d'estimation du couple d'une machine électrique à rotor bobiné comportant un module de transformation apte à déterminer des valeurs des courants des phases du stator de ladite machine électrique transformées dans un repère biphasé, ledit module étant apte à délivrer un vecteur d'intensité comportant lesdites valeurs de courants transformées ainsi qu'une valeur du courant rotorique de ladite machine électrique, et un calculateur comportant au moins un réseau de neurones apte à appliquer une fonction sigmoïde, en entrée duquel est fourni ledit vecteur d'intensité, ledit calculateur étant adapté pour calculer une estimation du couple délivré par la machine à partir d'une grandeur obtenue en sortie dudit au moins un réseau de neurones, caractérisé en ce que ledit calculateur comporte un unique réseau de neurones en sortie duquel ladite grandeur obtenue correspond à un flux global dérivé des deux composantes dans le repère biphasé du flux magnétique induit par la machine électrique et dont la valeur est déterminable, pour un vecteur d'intensité donné, à partir d'une mesure de couple effectuée sur un banc d'essais de ladite machine pour ledit vecteur d'intensité donné.

L'invention concerne encore un véhicule automobile à propulsion électrique ou hybride comprenant une machine électrique à rotor bobiné pour la propulsion dudit véhicule et un module de régulation du couple délivré par ladite machine électrique, caractérisé en ce que ledit module de régulation comprend un dispositif d'estimation du couple tel que décrit ci-dessus.

D'autres caractéristiques et avantages de l'invention ressortiront de la description qui en est faite ci-après, à titre indicatif et nullement limitatif, en référence aux dessins annexés, dans lesquels :

[Fig. 1] illustre de façon schématique un dispositif d'estimation du couple d'une machine électrique selon l'invention ;

[Fig. 2] illustre de façon schématique un module de régulation du couple délivré par une machine électrique d'un véhicule automobile à propulsion électrique ou hybride, intégrant le dispositif d'estimation de la figure 1.

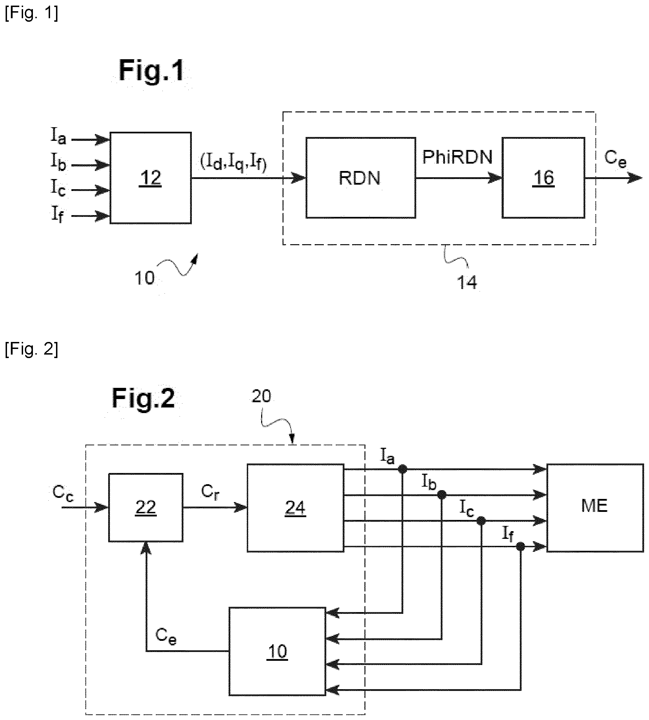

La figure 1 décrit un dispositif 10 d'estimation du couple délivré par une machine électrique à rotor bobiné. La machine électrique est destinée à la propulsion d'un véhicule automobile hybride ou électrique. Le dispositif d'estimation du couple 10 est conçu pour recevoir en entrée les valeurs des courants Ia, Ib, Ic circulant dans les phases du stator de la machine électrique, ainsi que la valeur du courant If circulant dans le rotor de la machine électrique. Ces valeurs de courant sont par exemple mesurées par des capteurs associés à la machine électrique. Le dispositif d'estimation du couple 10 est conçu pour traiter ces signaux d'intensité d'alimentation de la machine électrique reçus en entrée et pour fournir en sortie une estimation Ce du couple délivré par la machine électrique.

En premier lieu, le dispositif 10 d'estimation de couple comprend un module de transformation 12 destiné à calculer les valeurs reçues des courants des phases Ia, Ib et Ic transformées dans un repère biphasé. Le repère biphasé peut être par exemple un repère de Park. On pourrait également utiliser un repère de Clarke. Le repère de Park est lié au champ tournant de la machine électrique et permet d'exprimer les valeurs des courants statoriques Ia, Ib et Ic circulant dans les trois phases du stator en un vecteur comprenant deux coordonnées, respectivement une valeur de courant direct Id et une valeur de courant quadratique Iq. On ajoute à ce vecteur une troisième coordonnée égale à la valeur du courant rotorique If circulant dans le rotor de la machine électrique. Ainsi, par transformation dans le repère de Park, le module de transformation 12 délivre un vecteur d'intensité de dimension 3 (Id, Iq, If), qui est fourni en entrée d'un calculateur 14 du dispositif 10 d'estimation du couple, qui est conçu pour calculer l'estimation du couple Ce délivré par la machine électrique en fonction du vecteur d'intensité délivré par le module 12.

Conformément à l'invention, le calculateur 14 comporte un unique réseau de neurones RDN, en entrée duquel on applique le vecteur d'intensité (Id, Iq, If), soit les courants statoriques transformés dans le repère de Park, ainsi que le courant rotorique de la machine et en sortie duquel on obtient une grandeur correspondant à un flux global dérivé des deux composantes dans le repère de Park du flux magnétique induit par la machine électrique. Autrement dit, la sortie du réseau de neurones unique RDN délivre une grandeur représentative d'un flux global intégrant la composante directe PhidD du flux magnétique créé par la machine électrique et la composante quadratique PhiQ du flux magnétique.

Cette structure à un réseau de neurones a physiquement du sens, comme en témoigne les équations électromagnétiques de la machine électrique, qui traduisent les interactions existant entre d'une part, le couple délivré par la machine et, d'autre part, les grandeurs magnétiques, exprimant les composantes du flux PhidD et PhiQ, et électriques, exprimant les composantes du courant Id et Iq. En effet, la mise en équation de la machine permet d'exprimer l'estimation Ce du couple fourni par la machine électrique selon la relation suivante :

$$Ce = 3p/2.(PhiD \times Iq - PhiQ \times Id), \qquad (1)$$

où p représente le nombre de paires de pôles de la machine électrique.

Par ailleurs, la composante directe PhiD du flux magnétique peut s'exprimer selon la relation suivante :

$$PhiD = Ld \times Id + Mf \times If, \qquad (2)$$

où Ld représente l'inductance directe de la machine et Mf l'inductance mutuelle entre les enroulements statoriques et l'enroulement rotorique de la machine.

Egalement, la composante quadratique PhiQ du flux magnétique peut s'exprimer selon la relation suivante :

$$PhiQ = Lq \times Iq \qquad (3)$$

où Lq représente l'inductance en quadrature de la machine.

D'où, en injectant les relations (2) et (3) dans la relation (1) ci-dessus, on obtient :

$$Ce = 3p/2.( \text{Ld x Id x Iq} + \text{Mf x If x Iq} - \text{Lq x Iq x Id}),$$

soit:

$$Ce = 3p/2.( \text{Ld x Id} + \text{Mf x If} - \text{Lq x Id}).\text{Iq} \qquad (4)$$

Autrement dit, en passant d'une structure à deux réseaux de neurones comme dans l'état de la technique discuté en préambule pour fournir en sortie respectivement les composantes directe PhiD et quadratique PhiQ du flux magnétique, à une structure avec un unique réseau de neurones, ce n'est plus à proprement parler la composante directe PhiD du flux que l'on obtient en sortie de cet unique réseau de neurones, mais le terme exprimé entre parenthèses dans la relation (4) ci-dessus, représentatif d'un flux global intégrant les deux flux PhiD et PhiQ. La sortie du réseau de neurones unique RDN du calculateur 16 est nommée PhiRDN et peut donc s'exprimer selon la relation suivante (5) :

$$PhiRDN = \frac{Ce}{\frac{3p}{2} \times Iq}$$

Aussi, il découle de cette relation que la grandeur PhiRDN en sortie du réseau de neurones uniques est une valeur déterminable, pour un vecteur d'intensité donné, à partir d'une mesure de couple effectuée sur un banc d'essais de la machine pour ledit vecteur d'intensité donné. Cette caractéristique est particulièrement avantageuse pour réaliser l'apprentissage de ce réseau de neurones unique RDN, puisque les paramètres du réseau de neurones pourront alors être réglés en utilisant directement des mesures effectuées sur le banc d'essai de la machine, plutôt qu'un modèle de la machine, ce qui réduit fortement l'erreur faite sur l'estimation de couple calculée à partir de la sortie du réseau de neurones.

Le réseau de neurones unique RDN est en effet constitué d'un certain nombre de neurones, définis par leurs paramètres (poids, biais) et par leurs fonctions d'activation. Chaque fonction d'activation est une fonction sigmoïde, ici par exemple une fonction logsig :

$$x \to \frac{1}{1 + e^{-x}}$$

Aussi, chaque neurone d'une couche de neurones produit une sortie liée aux sorties de la couche précédente de neurones en appliquant la fonction suivante :

$$logsig(\textstyle\sum_{i=1}^{n} wixi + b),$$

où xi sont les sorties de la couche précédente de neurones,

b est le biais associé au neurone appliquant la fonction,

et wi représente le poids associé au neurone de la couche précédente fournissant la sortie xi.

Le nombre de neurones du réseau, les valeurs des poids et des biais des différents neurones constituent ainsi les paramètres du réseau de neurones unique RDN susceptibles de réglage, qui peuvent en particulier être déterminés lors d'une étape préalable d'apprentissage du réseau de neurones, qui va maintenant être décrite.

Comme indiqué plus haut, l'apprentissage du réseau de neurones unique RDN peut avantageusement être réalisé à partir de mesures effectuées sur banc. Ainsi, pour réaliser l'apprentissage, on utilise un ensemble de vecteurs d'intensité (Id, Iq, If) différents et de mesures de couples associées effectuées sur un banc d'essai de la machine électrique. Pour chaque doublet vecteur d'intensité et mesure de couple associée obtenue sur le banc, on en déduit la grandeur PhiRDN en sortie du réseau de neurones uniques RDN, en appliquant la relation (5) ci-dessus.

On construit de cette façon une base de données d'apprentissage du réseau de neurones, constituée d'un ensemble de quadruplets (Id, Iq, If, PhiRDN), à partir de l'ensemble de mesures de couples effectuées sur le banc pour les différents vecteurs d'intensité testés. L'apprentissage du réseau de neurones peut alors être effectué à partir d'outils classiques, par exemple parmi les algorithmes d'apprentissage de « Toolbox Neural Network » de Matlab®.

Le calculateur 14 comprend un module de calcul 16 en sortie du réseau de neurones RDN. Ce module de calcul 16 est conçu pour calculer, à partir de la grandeur PhiRDN obtenue en sortie du réseau de neurones RDN, associée au vecteur d'intensité (Id, Iq, If) reçu en entrée, l'estimation Ce du couple délivré par la machine électrique en appliquant la relation suivante :

$$Ce = 3p/2.PhiRDN.Iq$$

A l'issue de cette étape de calcul, on obtient donc une estimation fiable du couple délivré par la machine électrique, l'erreur d'estimation étant en effet largement réduite en raison de l'utilisation directe de mesures sur banc d'essai pour réaliser l'apprentissage, tout en limitant la quantité de ressources de calcul et de mémoire nécessaire pour mettre en oeuvre l'estimation, celle-ci reposant sur une structure à réseau de neurones unique.

En référence à la figure 2, le dispositif d'estimation 10, qui vient d'être décrit peut par exemple être mis en oeuvre au sein d'un module de régulation 20 du couple délivré par une machine électrique ME à rotor bobiné destinée à la propulsion d'un véhicule automobile électrique ou hybride. Le module de régulation 20 reçoit en entrée un couple de consigne Cc, déterminé par exemple en fonction de l'enfoncement de la pédale d'accélérateur par le conducteur du véhicule. Ce couple de consigne Ce est traité par un bloc de régulation 22. Le bloc de régulation 22 est prévu pour délivrer un couple régulé Cr à un actionneur électrotechnique 24, qui va délivrer les courants d'alimentation Ia, Ib, Ic des trois phases du stator de la machine électrique ME et le courant d'alimentation If du bobinage du rotor de la machine. Le module de régulation 20 comporte donc le dispositif 10 d'estimation du couple 10, tel que décrit précédemment, qui reçoit en entrée les courants d'alimentation des phases du stator Ia, Ib, Ic et du bobinage du rotor If et fournit au bloc de régulation 22 l'estimation Ce de couple délivré par la machine électrique. Le bloc de régulation 22 est alors adapté pour calculer le couple régulé Cr en fonction de la différence entre le couple de consigne Ce et l'estimation de couple Ce fournie par le dispositif 10 d'estimation.

## Revendications

1. Procédé d'estimation du couple d'une machine électrique (ME) à rotor bobiné, comprenant les étapes de :

   recevoir des valeurs des courants des phases (Ia, Ib, Ic) du stator de ladite machine électrique et du courant rotorique (If) de ladite machine électrique,
   transformer lesdites valeurs des courants des phases (Ia, Ib, Ic) du stator dans un repère biphasé,
   déterminer un vecteur d'intensité comportant lesdites valeurs de courants transformées (Id, Iq), ainsi que ladite valeur de courant rotorique (If),
   fournir ledit vecteur d'intensité en entrée d'au moins un réseau de neurones (RDN) appliquant une fonction sigmoïde,
   calculer une estimation du couple (Ce) délivré par la machine à partir d'une grandeur (PhiRDN) obtenue en sortie dudit au moins un réseau de neurones,
   ledit procédé étant **caractérisé en ce que** ledit vecteur d'intensité est fourni en entrée d'un unique réseau de neurones (RDN), en sortie duquel ladite grandeur (PhiRDN) obtenue correspond à un flux global dérivé des deux composantes dans le repère biphasé du flux magnétique induit par la machine électrique et dont la valeur est déterminable, pour un vecteur d'intensité donné, à partir d'une mesure de couple effectuée sur un banc d'essais de ladite machine pour ledit vecteur d'intensité donné.

2. Procédé selon la revendication 1, **caractérisé en ce qu'**il comprend les étapes préalables de construire une base de données d'apprentissage dudit réseau de neurones à partir d'un ensemble de mesures de couple effectuées sur le banc pour différents vecteurs d'intensité et de réaliser l'apprentissage dudit réseau de neurones unique en fonction de ladite base de données d'apprentissage.

3. Procédé selon la revendication 1 ou 2, **caractérisé en ce que** l'estimation du couple (Ce) délivré par la machine électrique est calculée en appliquant la relation :

$$Ce = 3p/2*phiRDN*Iq$$

où p représente le nombre de paires de pôles de la machine électrique, phiRDN est ladite grandeur obtenue en sortie dudit réseau de neurones unique, et

Iq est la valeur de courant quadratique issue de la transformation des valeurs des courants des phases (Ia, Ib, Ic) du stator dans le repère biphasé.

4. Procédé selon l'une quelconque des revendications 1 à 3, **caractérisé en ce que** ladite fonction sigmoïde est une fonction logsig :

$$x \to \frac{1}{1 + e^{-x}}$$

5. Dispositif (10) d'estimation du couple d'une machine électrique (ME) à rotor bobiné comportant un module de transformation (12) apte à déterminer des valeurs des courants des phases du stator de ladite machine électrique transformées dans un repère biphasé, ledit module étant apte à délivrer un vecteur d'intensité comportant lesdites valeurs de courants transformées (Id, Iq) ainsi qu'une valeur du courant rotorique (If) de ladite machine électrique, et un calculateur (14) comportant au moins un réseau de neurones (RDN) apte à appliquer une fonction sigmoïde, en entrée duquel est fourni ledit vecteur d'intensité, ledit calculateur (14) étant adapté pour calculer une estimation du couple (Ce) délivré par la machine à partir d'une grandeur (PhiRDN) obtenue en sortie dudit au moins un réseau de neurones, **caractérisé en ce que** ledit calculateur (14) comporte un unique réseau de neurones (RDN) en sortie duquel ladite grandeur obtenue (PhiRDN) correspond à un flux global dérivé des deux composantes dans le repère biphasé du flux magnétique induit par la machine électrique et dont la valeur est déterminable, pour un vecteur d'intensité donné, à partir d'une mesure de couple effectuée sur un banc d'essais de ladite machine pour ledit vecteur d'intensité donné.

6. Véhicule automobile à propulsion électrique ou hybride comprenant une machine électrique (ME) à rotor bobiné pour la propulsion dudit véhicule et un module de régulation (20) du couple délivré par ladite machine électrique, **caractérisé en ce que** ledit module de régulation (20) comprend un dispositif d'estimation du couple selon la revendication 5. 1

**Patentansprüche**

1. Verfahren zur Schätzung des Drehmoments einer elektrischen Maschine (ME) mit gewickeltem Rotor, das die folgenden Schritte umfasst:

Empfangen von Werten der Phasenströme (Ia, Ib, Ic) des Stators der elektrischen Maschine und des Rotorstroms (If) der elektrischen Maschine, Transformieren der Phasenstromwerte (Ia, Ib, Ic) des Stators in ein Zweiphasen-Koordinatensystem,
Bestimmen eines Intensitätsvektors, der die transformierten Stromwerte (Id, Iq) sowie den Wert des Rotorstroms (If) enthält, Liefern des Intensitätsvektors an den Eingang mindestens eines neuronalen Netzes (RDN), das eine Sigmoidfunktion anwendet,
Berechnen einer Schätzung des von der Maschine gelieferten Drehmoments (Ce) anhand einer am Ausgang des mindestens einen neuronalen Netzes erhaltenen Größe (PhiRDN), wobei das Verfahren **dadurch gekennzeichnet ist, dass** der Intensitätsvektor an den Eingang eines einzigen neuronalen Netzes (RDN) geliefert wird, an dessen Ausgang die erhaltene Größe (PhiRDN) einem Gesamtfluss entspricht, der aus den beiden Komponenten im Zweiphasen-Koordinatensystem des von der elektrischen Maschine induzierten Magnetflusses abgeleitet ist und dessen Wert für einen gegebenen Intensitätsvektor anhand einer Drehmomentmessung bestimmbar ist, die auf einem Prüfstand der Maschine für den gegebenen Intensitätsvektor durchgeführt wurde.

2. Verfahren nach Anspruch 1, **dadurch gekennzeichnet, dass** es die vorhergehenden Schritte zum Aufbau einer Trainingsdatenbank des neuronalen Netzes aus einem Satz von Drehmomentmessungen umfasst, die auf dem Prüfstand für verschiedene Intensitätsvektoren durchgeführt wurden, und zum Durchführen des Trainings des einzigen neuronalen Netzes in Abhängigkeit von der Trainingsdatenbank.

3. Verfahren nach Anspruch 1 oder 2, **dadurch gekennzeichnet, dass** die Schätzung des von der elektrischen Maschine gelieferten Drehmoments (Ce) durch Anwendung der folgenden Gleichung berechnet wird:

$$Ce = 3p/2*phiRDN*Iq$$

wobei p die Anzahl der Polpaare der elektrischen Maschine darstellt, phiRDN die Größe ist, die am Ausgang des besagten einzigen neuronalen Netzes erhalten wird, und Iq der quadratische Stromwert ist, der sich aus der Transformation der Phasenstromwerte (Ia, Ib, Ic) des Stators in das Zweiphasen-Koordinatensystem ergibt.

4. Verfahren nach einem der Ansprüche 1 bis 3, **dadurch gekennzeichnet, dass** die Sigmoidfunktion eine Logsig-Funktion ist:

$$x \rightarrow \frac{1}{1 + e^{-x}}$$

5. Vorrichtung (10) zur Schätzung des Drehmoments einer elektrischen Maschine (ME) mit gewickeltem Rotor, die ein Transformationsmodul (12) enthält, das in der Lage ist, Phasenstromwerte des Stators der elektrischen Maschine zu bestimmen, die in ein Zweiphasen-Koordinatensystem transformiert wurden, wobei das Modul geeignet ist, einen Intensitätsvektor zu liefern, der die transformierten Stromwerte (Id, Iq) sowie einen Wert des Rotorstroms (If) der elektrischen Maschine enthält, und einen Rechner (14), der mindestens ein neuronales Netz (RDN) enthält, das geeignet ist, eine Sigmoidfunktion anzuwenden, und an dessen Eingang der Intensitätsvektor geliefert wird, wobei der Rechner (14) geeignet ist, eine Schätzung des von der Maschine gelieferten Drehmoments (Ce) anhand einer Größe (PhiRDN) zu berechnen, die am Ausgang des mindestens einen neuronalen Netzes erhalten wird, **dadurch gekennzeichnet, dass** der Rechner (14) ein einziges neuronales Netz (RDN) enthält, an dessen Ausgang die erhaltene Größe (PhiRDN) einem Gesamtfluss entspricht, der aus den beiden Komponenten im Zweiphasen-Koordinatensystem des von der elektrischen Maschine induzierten Magnetflusses abgeleitet ist und dessen Wert für einen gegebenen Intensitätsvektor anhand einer Drehmomentmessung bestimmbar ist, die auf einem Prüfstand der Maschine für den gegebenen Intensitätsvektor durchgeführt wurde.

6. Kraftfahrzeug mit Elektro- oder Hybridantrieb, das eine elektrische Maschine (ME) mit gewickeltem Rotor für den Antrieb des Fahrzeugs und ein Modul (20) zur Regelung des von der elektrischen Maschine gelieferten Drehmoments umfasst, **dadurch gekennzeichnet, dass** das Regelungsmodul (20) eine Vorrichtung zur Schätzung des Drehmoments nach Anspruch 5 umfasst.

**Claims**

1. Method for estimating the torque of a wound-rotor electric machine (ME), comprising the steps of:

    receiving values of the currents of the phases (Ia, Ib, Ic) of the stator of said electric machine and of the rotor current (If) of said electric machine, transforming said values of the currents of the phases (Ia, Ib, Ic) of the stator into a two-phase reference frame,
    determining a current vector comprising said transformed current values (Id, Iq), as well as said rotor current value (If), delivering said current vector to the input of at least one neural network (RDN) applying a sigmoid function,
    calculating an estimate of the torque (Ce) delivered by the machine on the basis of a quantity (PhiRDN) obtained at the output of said at least one neural network, said method being **characterized in that** said current vector is delivered to the input of a single neural network (RDN), at the output of which said obtained quantity (PhiRDN) corresponds to an overall flux derived from the two components in the two-phase reference frame of the magnetic flux induced by the electric machine and the value of which can be determined, for a given current vector, on the basis of a torque measurement performed on a test bench of said machine for said given current vector.

2. Method according to Claim 1, **characterized in that** it comprises the previous steps of constructing a database for training said neural network on the basis of a set of torque measurements performed on the bench for various current vectors and of training said single neural network as a function of said training database.

3. Method according to Claim 1 or 2, **characterized in that** the estimate of the torque (Ce) delivered by the electric machine is calculated by applying the relationship:

$$Ce = 3p/2*phiRDN*Iq$$

where p represents the number of pairs of poles of the electric machine, phiRDN is said quantity obtained at the output of said single neural network, and

Iq is the quadratic current value resulting from transforming the values of the currents of the phases (Ia, Ib, Ic) of the stator into the two-phase reference frame.

4. Method according to any one of Claims 1 to 3, **characterized in that** said sigmoid function is a logsig function:

$$x \rightarrow \frac{1}{1 + e^{-x}}$$

5. Device (10) for estimating the torque of a wound-rotor electric machine (ME) comprising a transformation module (12) which is able to determine values of currents of the phases of the stator of said electric machine which are transformed into a two-phase reference frame, said module being able to deliver a current vector comprising said transformed current values (Id, Iq) as well as a value of the rotor current (If) of said electric machine, and a computer (14) comprising at least one neural network (RDN) which is able to apply a sigmoid function and to the input of which said current vector is delivered, said computer (14) being suitable for calculating an estimate of the torque (Ce) delivered by the machine on the basis of a quantity (PhiRDN) obtained at the output of said at least one neural network, **characterized in that** said computer (14) comprises a single neural network (RDN) at the output of which said obtained quantity (PhiRDN) corresponds to an overall flux derived from the two components in the two-phase reference frame of the magnetic flux induced by the electric machine and the value of which can be determined, for a given current vector, on the basis of a torque measurement performed on a test bench of said machine for said given current vector.

6. Electric or hybrid motor vehicle comprising a wound-rotor electric machine (ME) for driving said vehicle and a module (20) for controlling the torque delivered by said electric machine, **characterized in that** said control module (20) comprises a device for estimating the torque according to Claim 5.

[Fig. 1]

# Fig.1

$I_a$ →
$I_b$ →
$I_c$ →
$I_f$ →
**12**
$(I_d, I_q, I_f)$ →
**RDN**
PhiRDN →
**16**
$C_e$ →

10

14

[Fig. 2]

# Fig.2

20

$C_c$ →
**22**
$C_r$ →
**24**
$I_a$
$I_b$
$I_c$
$I_f$
**ME**

$C_e$
**10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3269035 A1
- FR 3054391